# EUROPÄISCHE PATENTSCHRIFT

(11) **EP 3 137 382 B1**
(45) Veröffentlichungstag und Bekanntmachung des Hinweises auf die Patenterteilung: **07.03.2018**
(21) Anmeldenummer: 15722467.6
(22) Anmeldetag: 29.04.2015
(51) Int. Cl.: B65B 51/14, B31B 50/64, B29C 65/10

(54) **VERFAHREN UND VORRICHTUNG ZUM THERMISCHEN AKTIVIEREN VON VERPACKUNGSMÄNTELN**
METHOD AND DEVICE FOR THERMALLY ACTIVATING PACKAGING SHEATHS
PROCÉDÉ ET DISPOSITIF D'ACTIVATION THERMIQUE DE GAINES D'EMBALLAGE

(30) Priorität: 29.04.2014 DE 102014006099
(43) Veröffentlichungstag der Anmeldung: 08.03.2017
(73) Patentinhaber: SIG Technology AG, 8212 Neuhausen am Rheinfall (CH)
(72) Erfinder: RÜEGG, Martin, 8248 Uhwiesen (CH); WEBER, Daniel, 8207 Schaffhausen (CH); PÖLL, Holger, 70439 Stuttgart (DE); PLÜSS, Marco, 8245 Feuerthalen (CH)
(74) Vertreter: Cohausz & Florack
(86) Internationale Anmeldenummer: PCT/EP2015/059307
(87) Internationale Veröffentlichungsnummer: WO 2015/165945

(56) Entgegenhaltungen:
- WO-A1-97/39958
- DE-A1-102010 050 502
- US-A- 2 169 345

## Beschreibung

Die Erfindung betrifft ein Verfahren zum thermischen Aktivieren von rohrförmigen Verpackungsmänteln aus Karton/Kunststoff-Verbundmaterial, insbesondere für Verpackungen für flüssige Lebensmittel, wobei der rohrförmige Verpackungsmantel zur Herstellung des Bodens oder des Kopfes der Verpackung von einer Heizvorrichtung mit einem heißen Gas beaufschlagt wird, wobei die Heizvorrichtung in Wirkkontakt mit den zu aktivierenden Flächen gebracht wird, indem die Heizvorrichtung zum Aktivieren ins Innere des rohrförmigen Verpackungsmantels bewegt wird und wobei der rohrförmige Verpackungsmantel auf einem Dorn eines Dornrades angeordnet ist. Außerdem betrifft die Erfindung eine Vorrichtung zum thermischen Aktivieren von rohrförmigen Verpackungsmänteln aus Karton/Kunststoff-Verbundmaterial, insbesondere für Verpackungen für flüssige Lebensmittel, wobei der rohrförmige Verpackungsmantel zur Herstellung des Bodens oder des Kopfes der Verpackung von einer Heizvorrichtung mit einem heißen Gas beaufschlagt wird und wobei die Heizvorrichtung ein wenigstens eine Auslassöffnung aufweisendes Düsenelement aufweist, dessen äußere Form der inneren Form des zu aktivierenden Endes des rohrförmigen Verpackungsmantels entspricht.

Die Herstellung von quaderförmigen Verpackungen aus Karton/Kunststoff-Verbundmaterial, insbesondere für flüssige Lebensmittel, ist seit langem bekannt. Diese Verpackungen haben oft einen rechteckigen oder quadratischen Querschnitt über die gesamte Höhe, es sind jedoch in jüngerer Zeit auch Verpackungen am Markt erhältlich, welche nicht über ihre gesamte Höhe einen konstanten Querschnitt aufweisen. Als Packstoff für solche Verpackungen dienen vollflächig miteinander verbundene Materialien (Laminat) mit einer Kartonschicht als Trägermaterial und auflaminierten Kunststoffschichten zum Schutz vor dem Eindringen von Feuchtigkeit in das Trägermaterial. Je nach Art der Verpackung und des zu verpackenden Produktes kann das Laminat auch weitere Schichten aufweisen, beispielsweise eine dünne Aluminiumfolie als Sauerstoff- und Lichtsperrschicht oder weitere Kunststoffschichten wie EVOH, sowie entsprechend notwendige Haftvermittlerschichten.

In den meisten Fällen, insbesondere im Getränkebereich, weisen die bekannten Verbundverpackungen kombinierte Öffnungs- und Ausgießelemente auf, welche flüssigkeitsdicht mit der jeweiligen Verbundverpackung verbunden sind. Aus der EP 0 907 576 B1 ist eine solche Verbundverpackung bekannt, die auf ihrer Kopfseite ein Ausgießelement aus Kunststoff beinhaltet, welches in einer Füllmaschine in die Verbundverpackung eingearbeitet wird. Dazu wird zunächst aus einem Zuschnitt ein rohrförmiger Verpackungsmantel durch eine Längsnahtsiegelung der PE-Schichten vorgefertigt. Die weitere Verarbeitung erfolgt dann auf einem Dornrad, wobei der rohrförmige Verpackungsmantel auf einen Dorn mit quadratischem Querschnitt aufgeschoben wird, um zunächst das überstehende freie Ende der späteren Verbundverpackung zu formen und zu verschließen. Wenn, wie dargestellt, die Verbundverpackung mit einem Ausgießelement versehen werden soll, so erfolgt zunächst die Fertigstellung der Kopfseite der Verbundpackung, wobei das Ausgießelement über den Dorn zugeführt und der rohrförmige Verpackungsmantel auf diesen aufgeschoben wird. Die Kopffaltung erfolgt dabei über zuvor eingebrachte Rilllinien, wobei die umzulegenden Giebelflächen mittels Presswerkzeugen auf die Stirnfläche des Dornes umgelegt werden. Für eine dauerhafte und flüssigkeitsdichte Verbindung werden die entsprechenden Kontaktflächen des Verbundmateriales mittels eines heißen Gases, beispielsweise mittels steriler Heißluft, erhitzt, so dass die äußeren PE-Flächen lokal aufschmelzen und so aktiviert werden. Anschließend werden die aktivierten PE-Flächen durch die Presswerkzeuge so lange druckbeaufschlagt, bis die fertige Giebelfläche flüssigkeitsdicht erkaltet ist.

Aus der DE 10 2010 050 502 A1 sind eine Vorrichtung und ein Verfahren zur Herstellung einer Verpackung bekannt, bei welcher im Giebelbereich ein Ausgießelement eingearbeitet ist, welches nicht in einer flachen Giebelfläche angeordnet ist, sondern in einem Giebel in Form eines Pyramidenstumpfes. Eine damit hergestellte Verpackung hat im Giebelbereich neben den vier Giebelflächen auch vier vom Giebelbereich abstehende, aus überschüssigem Verpackungsmaterial gebildete Ohren, welche auf die Giebelflächen umgelegt und dort angeheftet werden. Die grundsätzliche Herstellung erfolgt dabei in der gleichen Weise, nämlich durch Aktivierung der zu versiegelnden Kontaktflächen mittels steriler Heißluft, wobei der rohrförmige Verpackungsmantel ebenfalls auf den Dorn eines Dornrades aufgeschoben ist.

Der Aktivierungsvorgang bei den bekannten Herstellungsverfahren geschieht dabei mittels Heizvorrichtungen unter Zufuhr des zur Aktivierung verwendeten Heißgases. Dabei müssen die Dauer und Temperatur der Aktivierung optimal auf das Verbundmaterial abgestimmt sein, um die gewünschte flüssigkeitsdichte Verbindung des Giebelbereichs zu erhalten. Gleiches gilt auch für solche Verpackungen, bei denen zunächst die Faltung und Versiegelung des Bodenbereiches erfolgt, welche nicht von unten, sondern in "klassischer Weise" von oben befüllt werden. Die bekannten Heizvorrichtungen haben teilweise einen komplizierten Aufbau und sind daher teuer in ihrer Herstellung und wartungsintensiv.

Der Erfindung liegt daher die Aufgabe zu Grunde, das eingangs genannte Verfahren bzw. eine entsprechende Vorrichtung zum thermischen Aktivieren von rohrförmigen Verpackungsmänteln so auszugestalten und weiterzubilden, dass die verwendete Heizvorrichtung konstruktiv einfach hergestellt werden kann und eine gleichmäßige Erwärmung zum Aktivieren der Kontaktflächen gewährleistet wird. Weiterhin ist erwünscht, dass die für den Aktivierungsprozess benötigte Energie möglichst vollständig zur Erhitzung der zu aktivierenden Oberflächen genutzt wird.

Verfahrensmäßig wird die Aufgabe dadurch gelöst, dass vor dem Einführen der Heizvorrichtung das freie Ende des rohrförmigen Verpackungsmantels zeitweise von einem rechteckigen oder quadratischen Querschnitt zu einem runden Querschnitt verformt wird. Durch einen solchen innigen Kontakt wird die für den Aktivierungsvorgang notwendige Energie unmittelbar und gleichmäßig in die zu erwärmenden Flächen eingebracht. Während der Dorn einen rechteckigen oder quadratischen Querschnitt entsprechend der späteren Verpackungsform aufweist, hat die Erfindung erkannt, dass eine zeitweise Umformung des freien Endes in eine runde Querschnittsform für den Aktivierungsvorgang äußerst vorteilhaft ist. Auf diese Weise erfolgt eine besonders gleichmäßige Erwärmung, da keine Kanten- und Eckbereiche vorhanden sind, in denen sich das Heißgas stauen kann. Dies führt zu einem verbesserten Siegelprozess und zu einer optimalen Energieausbeute, ohne dass es zur Gefahr von Überhitzungen kommen kann.

Hinsichtlich einer entsprechenden Vorrichtung erfolgt die Lösung der Aufgabe dadurch, dass das Düsenelement an seinem freien Ende eine zylindrische Form aufweist und dass Einrichtungen zum zeitweisen Verformen des freien Endes des rohrförmigen Verpackungsmantels von einem rechteckigen oder quadratischen Querschnitt zu einem runden Querschnitt vorgesehen sind. Erfindungsgemäß gelangt so die gesamte Heißluft unmittelbar an die zu aktivierenden Kunststoffoberflächen des Verbundmaterials und beinhaltet eine optimale Ausnutzung der eingesetzten Energie. Dies ist konstruktiv besonders zweckmäßig, wenn die äußere Form des zylindrischen Düsenelements in ihrem Durchmesser nahezu dem Innendurchmesser des im Aktivierungsbereich nun einen runden Querschnitt aufweisenden, rohrförmigen Verpackungsmantel entspricht. Durch die konstruktive Abstimmung von Düsenelement und Verpackungsmantel kann die verwendete Energie unmittelbar zur Aktivierung der Kunststoffoberflächen eingesetzt werden, ohne dass Verluste entstehen.

Eine weitere Lehre der Erfindung sieht vor, dass die Heizvorrichtung während des Aktivierungsvorganges relativ zum rohrförmigen Verpackungsmantel bewegt wird. Hierbei kann die zu aktivierende Fläche durch ein Abfahren der Austrittsöffnungen des Heißgases vergrößert werden. Es ist jedoch auch möglich, den Aktivierungsvorgang ohne Relativbewegung durchzuführen.

Eine weitere Ausgestaltung der Erfindung sieht vor, dass die Auslassöffnungen des Düsenelements schlitzförmig oder gelocht ausgebildet sind. Besonders vorteilhaft ist es, wenn gemäß einer weiteren Ausbildung der Erfindung die Auslassöffnung des Düsenelements als umlaufender Ringspalt ausgebildet ist. Dies erlaubt einerseits eine besonders günstige Herstellung des Düsenelements und andererseits eine extrem gleichmäßige Erhitzung der zu aktivierenden Oberflächen.

Nach einer weiteren Lehre der Erfindung weist das Düsenelement ein zylindrischen Außenteil und ein mit diesem verbindbaren Innenteil sowie einem Ringraum zwischen Außenteil und Innenteil als Ringkanal zum Zuführen des Heißgases auf. Ein zylindrisches Düsenelement ist konstruktiv extrem einfach als Rotationsteil herzustellen, zweckmäßigerweise mit einem Außenbereichsdurchmesser, welcher im Wesentlichen dem Innendurchmesser des vorrübergehend umgeformten rohrförmigen Verpackungsmantels an dessen freien Ende entspricht.

Eine weitere bevorzugte Ausgestaltung der Erfindung sieht vor, dass die Auslassöffnungen in einer umlaufenden Ausnehmung münden. Auf diese Weise kann auf zusätzliche Kanäle, Bohrungen oder dergleichen zum Zuführen des Heißgases in die umlaufende Ausnehmung komplett verzichtet werden. Dies hat nicht nur eine besonders einfache Art der Herstellung sondern wiederum eine besonders gleichmäßige Erhitzung und damit einen verbesserten Siegelprozess zur Folge.

Eine weitere Lehre der Erfindung sieht vor, dass zur Verstellung der Größe des Spaltes das Außenteil und das Innenteil in axialer Richtung relativ zueinander verfahrbar sind. Auf diese Weise lässt sich eine optimale Einstellung des benötigten Heißgases für den jeweiligen Aktivierungsprozess definieren und festlegen und, im Bedarfsfall, auch mit wenig Aufwand an die geänderten Verhältnisse, beispielsweise eines anderen Verpackungsmantels, anpassen.

In weiterer Ausgestaltung der Erfindung ist vorgesehen, dass das Innenteil in einem Gewinde eines fest mit dem Außenteil verbundenen Halteelements verstellbar ist.

Eine solche Konstruktion ist besonders zweckmäßig, da hierdurch eine sehr genaue Verstellung möglich ist. Bevorzugt erfolgt die Verstellung von außen her über einen Sechskantschlüssel, wobei das Innenteil einen entsprechenden zentral angeordneten Innensechskant aufweist.

Eine andere Ausgestaltung der Erfindung sieht vor, dass das Innenteil mit einer Schraube und/oder einem Konterelement im Halteelement gesichert ist. Hierbei wird das Innenteil verstellsicher fixiert.

Eine weitere Lehre der Erfindung sieht vor, dass die bereits erwähnten Einrichtungen zum Verformen des freien Endes des rohrförmigen Verpackungsmantels mehrere Werkzeuge aufweisen, welche in radialer Richtung von außen auf den Verpackungsmantel einwirken und in ihrer Eingriffsstellung gemeinsam eine runde Innenform ergeben. Dabei ist es besonders zweckmäßig, wenn als Werkzeuge halbhohlzylindrische Formbacken vorgesehen sind, welche diametral gegenüberliegend angeordnet sind und durch Aufeinanderzubewegen das freie Ende des rohrförmigen Verpackungsmantels vorübergehend von ihrem rechteckigen oder quadratischen Querschnitt in die gewünschte runde Form bringen.

Eine alternative Ausbildung der Einrichtungen zum Verformen des freien Endes des rohrförmigen Verpackungsmantels sieht vor, dass eine axial auf den Verpackungsmantels aufschiebbare Matrize vorgesehen ist, welche in axialer Richtung außen um den Dorn herum zum Dornrad hin verfahrbar ist, wobei das freie Ende der Matrize von der Querschnittsform des Dornes in einen Bereich mit kreisrundem Querschnitt übergeht. Die Herstellung einer solchen Matrize ist jedoch im Vergleich zu den bevorzugten Zangenelementen deutlich aufwendiger.

Die Erfindung wird nachfolgend anhand einer lediglich ein bevorzugtes Ausführungsbeispiel darstellenden Zeichnung näher erläutert.

In der Zeichnung zeigen
- Fig. 1: einen rohrförmigen Verpackungsmantel in perspektivischer Ansicht,
- Fig. 2: ein Düsenelement einer erfindungsgemäßen Vorrichtung in perspektivischer Ansicht,
- Fig. 3: das Düsenelement aus Fig. 2 im Axialschnitt,
- Fig. 3a: Außenteil und Innenteil des Düsenelements in teilweise aufgebrochener Darstellung und
- Fig. 4: das Düsenelement in Aktivierungsstellung in perspektivischer Ansicht mit zur besseren Darstellung aufgeschnittenem Verpackungsmantel.

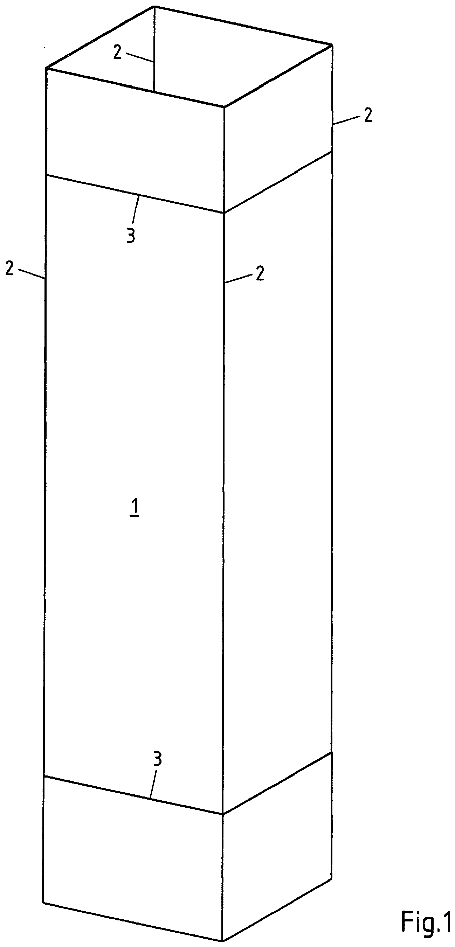

Fig. 1 zeigt zunächst einen rohrförmigen Verpackungsmantel 1 als Packmittel für eine spätere Getränkeverpackung. Ein solcher Verpackungsmantel 1 ist durch Längssiegelung aus einem Zuschnitt hergestellt, wobei die Längsnaht nicht dargestellt ist. Diese kann sich an einer beliebigen Stelle, beispielsweise im Mittelbereich oder an einer der Kanten 2 befinden. Ferner sind Rilllinien 3 zu erkennen, welche zur Faltung von Boden und Giebelbereich (Kopfbereich) der späteren Verpackung dienen.

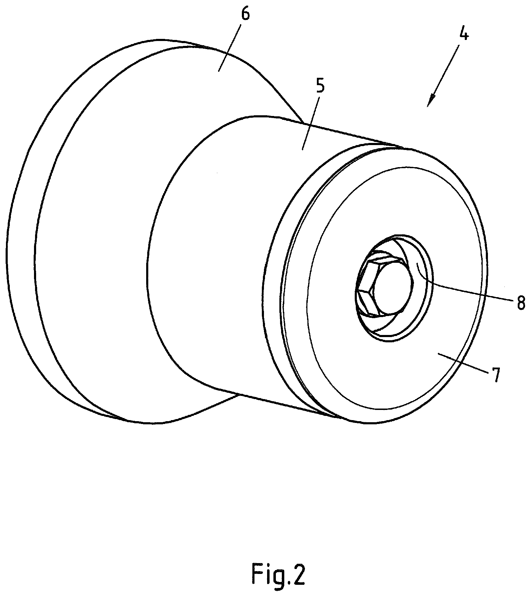

Fig. 2 zeigt nun ein für die erfindungsgemäße Vorrichtung bevorzugt verwendetes Düsenelement 4, welches zunächst und im Wesentlichen aus einem hohlzylindrischen Außenteil 5 mit einer konischen Verbreitung 6 und einem im Außenteil 5 angeordneten Innenteil 7 besteht, wobei das Innenteil 7 die offene Seite des hohlzylinderförmigen Außenteils 5 nahezu vollständig verschließt. Auf der Stirnseite des Innenteils 7 ist eine Ausnehmung 8 erkennbar, welche zur Aufnahme des Kopfes einer Schraube 9 zur Verbindung von Außenteil 5 und Innenteil 7 dient.

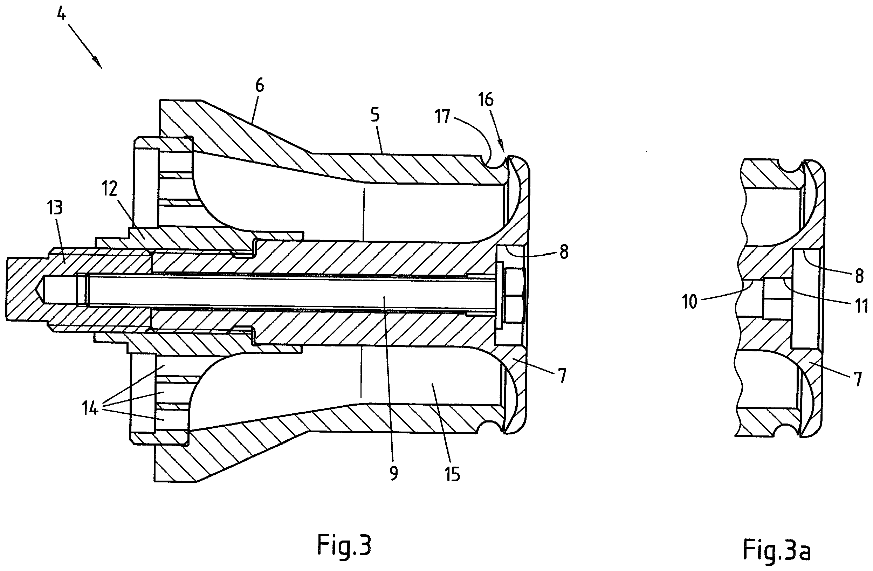

Zur besseren Darstellung ist in Fig. 3 das Düsenelement 4 im Axialschnitt dargestellt, hier wird ersichtlich, dass das Innenteil 7 eine zentrale Bohrung 10 aufweist, welche in der Ausnehmung 8 endet und in ihrem Endbereich einen Innensechskant 11 aufweist. Die Befestigung von Außenteil 5 und Innenteil 7 erfolgt mittels der bereits erwähnten Verschraubung durch diese Bohrung 10. Dabei wird die Schraube 9 durch die Ausnehmung 8 und die Bohrung 10 mit einem Halteelement 12 verschraubt, wobei der Schraubenkopf in der Ausnehmung 8 zu liegen kommt. Das Halteelement 12 ist schlüssig mit dem Außenelement 5 verbunden und verfügt über ein (nicht näher bezeichnetes) Innengewinde, in dem das Außengewinde des inneren Endes des Innenteils 7 verschraubt und so in axialer Richtung verstellbar ist.

In der aufgebrochenen Darstellung gemäß Fig. 3a ist erkennbar, dass die Bohrung 10 in ihrem Endbereich benachbart zur Ausnehmung 8 einen Innensechskant 11 aufweist. Dieser Innensechskant 11 dient zur relativen Verstellung von Außenteil 5 und Innenteil 7 in axialer Richtung, wie weiter unten noch näher erläutert werden wird. Das Ende der Schraube 9 greift in ein Innengewinde eines Konterelementes 13 ein, wodurch eine genau beabstandete Fixierung von Außenteil 5 und Innenteil 7 erfolgt, wie aus Fig. 3 deutlich ersichtlich ist.

Das Halteelement 12 weist eine ausreichende Anzahl an Durchtrittskanälen 14 für das Heißgas auf. Diese führen in einen Ringraum 15 zwischen Innenteil 7 und Außenteil 5. Die Zufuhr des zur Aktivierung notwendigen Heißgases, beispielsweise steriler Heißluft, erfolgt dabei bevorzugt in der in Fig. 3 dargestellten Ausführung, in der nämlich ein schmaler Ringspalt 16 als Auslassöffnung zwischen dem äußeren Rand der Stirnfläche des Innenteils 7 und dem hohlzylinderförmigen Außenteil 5 verbleibt, so dass ein gleichmäßiger Austritt des Heißgases umlaufend über den gesamten Umfang des Düsenelements 4 erfolgt. Gleich hinter der Düsenauslassöffnung ist im dargestellten und insoweit bevorzugten Ausführungsbeispiel eine umlaufende Ausnehmung 17 ausgeführt, wie aus den Figuren 2, 3 und 3a deutlich ersichtlich ist. Dadurch wird eine strömungstechnisch besonders gleichmäßige Beaufschlagung mit Heißgas ermöglicht.

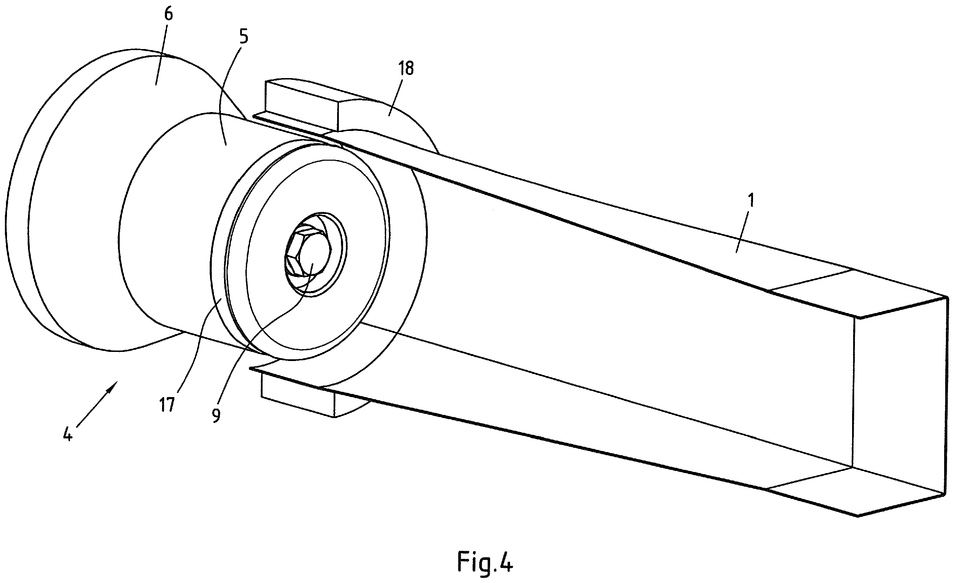

Fig. 4 zeigt schließlich das zuvor näher beschriebene Düsenelement 4 während eines Aktivierungsvorganges. Das Düsenelement 4 wird dabei in das offene Ende eines mit dem anderen Ende auf einem (nicht dargestellten) Dorn eines Dornrades aufgeschobenen Packungsmantels eingeführt. Man erkennt, dass der äußere Durchmesser des zylindrischen Außenteils 5 des Düsenelements 4 in etwa dem Innendurchmesser des zurechtgeformten, rohrförmigen Verpackungsmantels 1 entspricht, welcher zur besseren Darstellung mittig aufgeschnitten dargestellt ist.

Damit nun das freie Ende des rohrförmigen Verpackungsmantels 1 in die gewünschte runde Form gebracht wird, sorgen erfindungsgemäß zwei halbhohlzylindrische Formbacken 18 für die entsprechende Formgebung. Auch hier ist aus Gründen der übersichtlichen Darstellung nur eine der beiden Formbacken 18 dargestellt. Zur Verformung werden dabei die beiden Formbacken 18 aufeinander zu bewegt, wobei sich das freie Ende des rohrförmigen Verpackungsmantels 1 "automatisch" auf einfache und elegante Weise in die gewünschte runde Form bringen lässt.

Mit der erfindungsgemäßen Lösung ist eine optimale Energieausnutzung beim Aktivierungsvorgang erreicht worden, wobei zuverlässig durch die gleichmäßige Beaufschlagung des Heißgases über den gesamten Umfang des Düsenelementes eine optimal gleichmäßige Aktivierung erreicht wird.

## Patentansprüche

1. Verfahren zum thermischen Aktivieren von rohrförmigen Verpackungsmänteln aus Karton/Kunststoff-Verbundmaterial, insbesondere für Verpackungen für flüssige Lebensmittel, wobei der rohrförmige Verpackungsmantel zur Herstellung des Bodens oder des Kopfes der Verpackung von einer Heizvorrichtung mit einem heißen Gas beaufschlagt wird, wobei die Heizvorrichtung in Wirkkontakt mit den zu aktivierenden Flächen gebracht wird, indem die Heizvorrichtung zum Aktivieren ins Innere des rohrförmigen Verpackungsmantels bewegt wird, und wobei der rohrförmige Verpackungsmantel auf einem Dorn eines Dornrades angeordnet ist,
**dadurch gekennzeichnet, dass**
vor dem Einführen der Heizvorrichtung das freie Ende des rohrförmigen Verpackungsmantels zeitweise von einem rechteckigen oder quadratischen Querschnitt zu einem runden Querschnitt verformt wird.

2. Verfahren nach Anspruch 1,
**dadurch gekennzeichnet, dass**
die Heizvorrichtung während des Aktivierungsvorgangs relativ zum rohrförmigen Verpackungsmantel bewegt wird.

3. Vorrichtung zum thermischen Aktivieren von rohrförmigen Verpackungsmänteln (1) aus Karton/Kunststoff-Verbundmaterial, insbesondere für Verpackungen für flüssige Lebensmittel, wobei der rohrförmige Verpackungsmantel (1) zur Herstellung des Bodens oder des Kopfes der Verpackung von einer Heizvorrichtung mit einem heißen Gas beaufschlagt wird und wobei die Heizvorrichtung ein wenigstens eine Auslassöffnung aufweisendes Düsenelement (4) aufweist, dessen äußere Form der inneren Form des zu aktivierenden Endes des rohrförmigen Verpackungsmantels (1) entspricht,
**dadurch gekennzeichnet, dass**
das Düsenelement (4) an seinem freien Ende eine zylindrische Form aufweist und dass Einrichtungen zum zeitweisen Verformen des freien Endes des rohrförmigen Verpackungsmantels (1) von einem rechteckigen oder quadratischen Querschnitt zu einem runden Querschnitt vorgesehen sind.

4. Vorrichtung nach Anspruch 3,
**dadurch gekennzeichnet, dass**
die Auslassöffnungen des Düsenelements (4) schlitzförmig oder gelocht ausgebildet sind.

5. Vorrichtung nach Anspruch 3,
**dadurch gekennzeichnet, dass**
die Auslassöffnung des Düsenelements (4) als umlaufender Ringspalt (16) ausgebildet ist.

6. Vorrichtung nach einem der Ansprüche 3 bis 5,
**dadurch gekennzeichnet, dass**
das Düsenelement (4) ein zylindrisches Außenteil (5) und ein mit diesem verbindbares Innenteil (7) aufweist und dass der Ringraum zwischen Außenteil (5) und Innenteil (7) als Ringkanal (15) zum Zuführen des Heißgases ausgebildet ist.

7. Vorrichtung nach einem der Ansprüche 3 bis 6,
**dadurch gekennzeichnet, dass**
die Auslassöffnungen in einer umlaufenden Ausnehmung (17) münden.

8. Vorrichtung nach Anspruch 5,
**dadurch gekennzeichnet, dass**
zur Verstellung der Größe des Ringspaltes (16) das Außenteil (5) und das Innenteil (7) in axialer Richtung relativ zueinander verfahrbar sind.

9. Vorrichtung nach Anspruch 8,
**dadurch gekennzeichnet, dass**
das Innenteil (7) in einem Gewinde eines fest mit dem Außenteil (5) verbundenen Halteelements (12) verstellbar ist.

10. Vorrichtung nach Anspruch 9,
**dadurch gekennzeichnet, dass**
das Innenteil (7) mit einer Schraube (9) und/oder einem Konterelement (13) im Halteelement (12) gesichert ist.

11. Vorrichtung nach Anspruch 9 oder 10,
**dadurch gekennzeichnet, dass**
das Innenteil (7) mit einem zentral angeordneten Innensechskant (11) versehen ist.

12. Vorrichtung nach einem der Ansprüche 3 bis 11,
**dadurch gekennzeichnet, dass**
die Einrichtungen zum Verformen des freien Endes des rohrförmigen Verpackungsmantels (1) mehrere Werkzeuge aufweisen, welche in radialer Richtung von außen auf den Verpackungsmantel (1) einwirken und in ihrer Eingriffsstellung gemeinsam eine runde Innenform ergeben.

13. Vorrichtung nach Anspruch 12,
**dadurch gekennzeichnet, dass**
als Werkzeuge halbhohlzylindrische Formbacken (18) vorgesehen sind.

14. Vorrichtung nach einem der Ansprüche 3 bis 11,
**dadurch gekennzeichnet, dass**
die Einrichtungen zum Verformen des freien Endes des rohrförmigen Verpackungsmantels eine axial auf den Verpackungsmantel aufschiebbare Matrize aufweisen.

## Claims

1. Method for thermal activation of tube-shaped packaging sleeves made of cardboard/plastic composite material, in particular for packaging for liquid foods, wherein a hot gas is applied to the tube-shaped packaging sleeve by a heating device in order to produce the base or the head of the packaging, wherein the heating device is placed into effective contact with the surfaces to be activated by the heating device being moved inside the tube-shaped packaging sleeves for activation, and wherein the tube-shaped packaging sleeve is arranged on a mandrel of a mandrel wheel
**characterised in that**
before the introduction of the heating device, the free end of the tube-shaped packaging sleeve is deformed from a rectangular or quadratic cross section to a round cross section.

2. Method according to claim 1,
**characterised in that**
the heating device is moved relative to the tube-shaped packaging sleeve during the activation process.

3. Device for thermal activation of tube-shaped packaging sleeves (1) made of cardboard/plastic composite material, in particular for packaging for liquid foods, wherein a hot gas is applied to the tube-shaped packaging sleeve (1) by a heating device in order to produce the base or the head of the packaging and wherein the heating device has at least one nozzle element (4) with an outlet opening, the external shape of which nozzle element corresponds to the internal shape of the end of the tube-shaped packaging sleeve (1) to be activated,
**characterised in that**
the free end of the nozzle element (4) is cylindrical in shape, and **in that** devices for the deformation of the free end of the tube-shaped packaging sleeve (1) are provided.

4. Device according to claim 3,
**characterised in that**
the outlet openings of the nozzle element (4) are slit-shaped or perforated.

5. Device according to claim 3,
**characterised in that**
the outlet opening of the nozzle element (4) is designed as a circumferential annular gap (16).

6. Device according to any one of claims 3 to 5,
**characterised in that**
the nozzle element (4) has a cylindrical outer part (5) and an inner part (7) which can be connected to said outer part (5), and **in that** the annulus between the outer part (5) and inner part (7) is designed as an annular channel (15) for the supply of the hot gas.

7. Device according to any one of claims 3 to 6,
**characterised in that**
the outlet openings end in a circumferential recess (17).

8. Device according to claim 5,
**characterised in that**
the outer part (5) and the inner part (7) can be moved in an axial direction relative to one another in order to adjust the size of the annular gap (16).

9. Device according to claim 8,
**characterised in that** the inner part (7) can be adjusted in a thread of a holding element (12) which is firmly fixed to the outer part (5).

10. Device according to claim 9,
**characterised in that**
the inner part (7) is secured in the holding element (12) by means of a screw (9) and/or a counter element (13).

11. Device according to claim 9 or 10,
**characterised in that**
the inner part (7) has a centrally arranged hexagon socket (11).

12. Device according to any one of claims 3 to 11,
**characterised in that**
the devices for deforming the free end of the tube-shaped packaging sleeve (1) have several tools which act on the packaging sleeve (1) from outside in a radial direction and the mesh positions of which together form a round internal shape.

13. Device according to claim 12,
**characterised in that**
semi-hollow cylindrical shaping jaws (18) are provided as tools.

14. Device according to any one of claims 3 to 11,
**characterised in that**
the devices for deforming the free end of the tube-shaped packaging sleeve have a die which can be slid in an axial direction onto the packaging sleeve.

## Revendications

1. Procédé d'activation thermique de gaines d'emballage tubulaires en carton / matière synthétique, matériau composite, en particulier d'emballages pour produits alimentaires, liquides, sachant que, pour la fabrication du fond ou du sommet de l'emballage, la gaine d'emballage tubulaire est soumise à l'effet d'un gaz chaud, par un dispositif de chauffage, sachant que le dispositif de chauffage est mis en contact fonctionnel avec les surfaces à activer du fait que ledit dispositif de chauffage est déplacé à l'intérieur de la gaine d'emballage tubulaire aux fins d'activation, et sachant que la gaine d'emballage tubulaire est disposée sur un mandrin d'une roue à mandrins,
**caractérisé en ce que**, avant l'introduction du dispositif de chauffage, l'extrémité libre de la gaine d'emballage tubulaire est déformée, partiellement, sa section transversale passant d'une forme rectangulaire ou carrée à une forme ronde.

2. Procédé selon la revendication 1,
**caractérisé en ce que** le dispositif de chauffage est mû par rapport à la gaine d'emballage tubulaire pendant le processus d'activation.

3. Dispositif d'activation thermique de gaines d'emballage tubulaires (1) en carton / matière synthétique, matériau composite, en particulier d'emballages pour produits alimentaires, liquides, sachant que, pour la fabrication du fond ou du sommet de l'emballage, la gaine d'emballage tubulaire (1) est soumise à l'effet d'un gaz chaud par un dispositif de chauffage, et sachant que le dispositif de chauffage est doté d'un élément à buse (4) présentant au moins une ouverture de sortie, dont la forme extérieure correspond à la forme intérieure de l'extrémité de la gaine d'emballage tubulaire (1) devant être activée,
**caractérisé en ce que** l'élément à buse (4) présente, à son extrémité libre, une forme cylindrique et que des dispositifs sont prévus pour la déformation partielle de l'extrémité libre de la gaine d'emballage tubulaire (1), dont la section transversale passe d'une forme rectangulaire ou carrée à une forme ronde.

4. Dispositif selon la revendication 3,
**caractérisé en ce que** les ouvertures de sortie de l'élément à buse (4) sont réalisées en forme de fentes ou de trous.

5. Dispositif selon la revendication 3,
**caractérisé en ce que** l'ouverture de sortie de l'élément à buse (4) est réalisé en forme de fente annulaire périphérique (16).

6. Dispositif selon l'une des revendications 3 à 5,
**caractérisé en ce que** l'élément à buse (4) est doté d'une partie extérieure cylindrique (5) et d'une partie intérieure (7) pouvant être reliée à celle-ci, et que l'espace annulaire, entre la partie extérieure (5) et la partie intérieure (7), est réalisé en forme de canal annulaire (15) pour l'amenée du gaz chaud.

7. Dispositif selon l'une des revendications 3 à 6,
**caractérisé en ce que** les ouvertures de sortie débouchent dans un évidement périphérique (17).

8. Dispositif selon la revendications 5,
**caractérisé en ce que**, pour régler la grandeur de la fente annulaire périphérique (16), la partie extérieure (5) et la partie intérieure (7) peuvent être déplacées l'une par rapport à l'autre dans la direction axiale.

9. Dispositif selon la revendication 8,
**caractérisé en ce que** la partie intérieure (7) peut être guidée dans un filet d'un élément de retenue (12) relié fixement à la partie extérieure (5).

10. Dispositif selon la revendication 9,
**caractérisé en ce que** la partie intérieure (7) est sécurisée dans l'élément de retenue (12) par une vis (9) et / ou un contre-élément (13).

11. Dispositif selon revendication 9 ou 10,
**caractérisé en ce que** la partie intérieure (7) est pourvue d'un hexagone intérieur (11), disposé centralement.

12. Dispositif selon l'une des revendications 3 à 11,
**caractérisé en ce que** les dispositifs de déformation de l'extrémité libre de la gaine d'emballage tubulaire (1) sont dotés de plusieurs outils, qui agissent de l'extérieur, dans la direction radiale, sur la gaine d'emballage (1) et lui confèrent une forme intérieure ronde quand ils s'engrènent les uns dans les autres, dans leur position de coopération.

13. Dispositif selon la revendication 12,
**caractérisé en ce que** des mâchoires de formage semi-cylindriques, creuses (18) sont prévues en tant qu'outils.

14. Dispositif selon l'une des revendications 3 à 11,
**caractérisé en ce que** les dispositifs de déformation de l'extrémité libre de la gaine d'emballage tubulaire présentent une matrice, pouvant être déplacée axialement sur la gaine d'emballage.
